(19) Europäisches Patentamt / European Patent Office / Office européen des brevets

(11) **EP 4 096 937 B1**

(12) **FASCICULE DE BREVET EUROPEEN**

(45) Date de publication et mention de la délivrance du brevet:
**06.03.2024   Bulletin 2024/10**

(21) Numéro de dépôt: **21705586.2**

(22) Date de dépôt: **19.01.2021**

(51) Classification Internationale des Brevets (IPC):
**B60C 9/00** *(2006.01)*      **B60C 9/20** *(2006.01)*

(52) Classification Coopérative des Brevets (CPC):
**B60C 9/2006; B60C 9/0007;** B60C 2009/2016;
B60C 2009/2038; B60C 2009/2077;
B60C 2009/2093; B60C 2009/2096;
B60C 2009/2219; B60C 2200/06; B60C 2200/065;
B60C 2200/08

(86) Numéro de dépôt international:
**PCT/FR2021/050092**

(87) Numéro de publication internationale:
**WO 2021/152232 (05.08.2021 Gazette 2021/31)**

(54) **ARCHITECTURE OPTIMISÉE DE PNEUMATIQUE DE TYPE POIDS-LOURD, AGRICOLE OU GÉNIE CIVIL**

OPTIMIERTE ARCHITEKTUR EINES SCHWERLASTREIFENS VOM LANDWIRTSCHAFTLICHEN ODER HOCH- UND TIEFBAUTYP

OPTIMIZED ARCHITECTURE OF A HEAVY-DUTY TIRE OF THE AGRICULTURAL OR CIVIL ENGINEERING TYPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **29.01.2020   FR 2000852**

(43) Date de publication de la demande:
**07.12.2022   Bulletin 2022/49**

(73) Titulaire: **COMPAGNIE GENERALE DES ETABLISSEMENTS MICHELIN**
**63000 Clermont-Ferrand (FR)**

(72) Inventeurs:
 • **MANSUY, Philippe**
   **63040 CLERMONT-FERRAND Cedex 9 (FR)**
 • **REIX, Olivier**
   **63040 CLERMONT-FERRAND Cedex 9 (FR)**
 • **LAUBY, Lucas**
   **63040 CLERMONT-FERRAND Cedex 9 (FR)**
 • **PATAUT, Gaël**
   **63040 CLERMONT-FERRAND Cedex 9 (FR)**
 • **BARBARIN, François**
   **63040 CLERMONT-FERRAND Cedex 9 (FR)**

(74) Mandataire: **M.F.P. Michelin**
   **DCJ/PI - F35 - Ladoux**
   **23 place des Carmes-Déchaux**
   **63040 Clermont-Ferrand Cedex 9 (FR)**

(56) Documents cités:
   **EP-A1- 0 728 598         EP-A1- 2 168 787**
   **WO-A1-2007/003562   WO-A1-2015/004210**
   **WO-A1-2019/058053**

**Description**

La présente invention a pour objet un pneumatique radial, destiné à équiper un véhicule lourd de type génie civil, agricole ou de transport de marchandise, et concerne plus particulièrement l'armature de sommet d'un tel pneumatique, et encore plus particulièrement son armature de frettage.

Les pneumatiques radiaux destinés à équiper un véhicule lourd de type génie civil, agricole ou de transport de marchandise sont désignés au sens de la norme de la European Tyre and Rim Technical Organisation ou ETRTO.

Par exemple un pneumatique radial pour véhicule lourd de type génie civil, au sens de la norme de la European Tyre and Rim Technical Organisation ou ETRTO, est destiné à être monté sur une jante dont le diamètre est au moins égal à 25 pouces. Bien que non limitée à ce type d'application, l'invention est décrite pour un pneumatique radial de grande dimension destiné à être monté sur un dumper, notamment des véhicules de transport de matériaux extraits de carrières ou de mines de surface, par l'intermédiaire d'une jante dont le diamètre est au moins égal à 35 pouces et peut atteindre 57 pouces, voire 63 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. La direction circonférentielle est tangente à la circonférence du pneumatique.

Dans ce qui suit, les expressions «radialement intérieur», respectivement «radialement extérieur» signifient «plus proche », respectivement «plus éloigné de l'axe de rotation du pneumatique». Par « axialement intérieur », respectivement « axialement extérieur », on entend « plus proche », respectivement « plus éloigné du plan équatorial du pneumatique », le plan équatorial du pneumatique étant le plan passant par le milieu de la surface de roulement et perpendiculaire à l'axe de rotation. Par « un élément A axialement intérieur à un élément B d'une distance axiale Ds », on entend que l'élément A est plus proche du plan équateur que l'élément B et que la distance axiale entre les deux éléments est égale à la distance Ds. Ce type de phrase est généralisable avec la direction radiale et circonférentielle et la position extérieure versus intérieure, de l'un ou l'autre des éléments.

De façon générale un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule lourd de type génie civil, agricole ou de transport de marchandise, comprend habituellement au moins une couche de carcasse comprenant des renforts généralement métalliques, enrobés par un matériau polymérique de type élastomère ou élastomérique, obtenu par mélangeage et appelé mélange d'enrobage. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts métalliques d'une couche de carcasse sont sensiblement parallèles entre eux et forment, avec la direction circonférentielle, un angle compris entre 85° et 95°.

L'armature de sommet d'un pneumatique radial pour véhicule de type génie civil, agricole ou de transport de marchandise, comprend une superposition de couches de sommet s'étendant circonférentiellement, radialement à l'extérieur de l'armature de carcasse. Chaque couche de sommet est constituée de renforts généralement métalliques, parallèles entre eux et enrobés par un matériau polymérique de type élastomère ou mélange d'enrobage.

En ce qui concerne les renforts métalliques, un renfort métallique est caractérisé mécaniquement par une courbe représentant la force de traction (en N), appliquée au renfort métallique, en fonction de son allongement relatif (en %), dite courbe force-allongement. De cette courbe force-allongement sont déduites des caractéristiques mécaniques en traction du renfort métallique, telles que l'allongement structural As (en %), l'allongement total à la rupture At (en %), la force à la rupture Fm (charge maximale en N) et la résistance à la rupture Rm (en MPa), ces caractéristiques étant mesurées selon la norme ASTM D 2969-04 de 2014.

L'allongement total At du renfort métallique est, par définition, la somme de ses allongements structural, élastique et plastique (At = As + Ae + Ap) et particulièrement à la rupture où chacun des allongements est non nul. L'allongement structural As résulte du positionnement relatif des fils métalliques constitutifs du renfort métallique sous un faible effort de traction. L'allongement élastique Ae résulte de l'élasticité même du métal des fils métalliques, constituant le renfort métallique, pris individuellement, le comportement du métal suivant une loi de Hooke. L'allongement plastique Ap résulte de la plasticité, c'est-à-dire de la déformation irréversible, au-delà de la limite d'élasticité, du métal de ces fils métalliques pris individuellement. Ces différents allongements ainsi que leurs significations respectives, bien connus de l'homme du métier, sont décrits, par exemple, dans les documents US5843583, WO2005/014925 et WO2007/090603.

On définit également, en tout point de la courbe force-allongement d'un renfort métallique, un module en extension, exprimé en GPa, qui représente la pente de la droite tangente à la courbe force-allongement en ce point. En particulier, on appelle module élastique en extension ou module d'Young, le module en extension de la partie linéaire élastique de la courbe force-allongement.

Parmi les renforts métalliques, on distingue usuellement les renforts métalliques élastiques, tels que ceux utilisés dans les couches de protection, et les renforts métalliques non extensibles ou inextensibles.

Un renfort métallique élastique, dans son état non gommé, est caractérisé par un allongement structural As au moins égal à 1% et un allongement total à rupture At au moins égal à 4%. En outre, un renfort métallique élastique a un module élastique en extension au plus égal à 180 GPa, et compris usuellement entre 40 GPa et 150 GPa.

Par exemple, on connait de l'état de la technique un câble métallique comprenant une unique couche de N=5 éléments filaires métalliques enroulés en hélice. Chaque élément filaire métallique est constitué d'un monofilament en acier et présente un diamètre égal à 0,38 mm. Chaque élément filaire métallique est enroulé à un pas P, ici P=6,7 mm et est, préalablement à l'étape d'assemblage final en hélice des éléments filaires métalliques, individuellement préformé. Les éléments filaires métalliques définissent une voûte interne du câble, permettant de définir un diamètre de voûte Dv. La préformation et la voûte interne procurent au câble, une fois assemblé, une aération relativement importante, autrement dit, un espace entre chaque paire d'éléments filaires métalliques adjacents relativement grand. Une telle aération engendre un allongement structural As du câble égal à 2,3 %. Un tel câble est notamment destiné à être utilisé dans des pneumatiques, par exemple des pneumatiques pour véhicule de type poids-lourd.

Un renfort métallique non extensible est caractérisé par un allongement total At, sous une force de traction égale à 10% de la force à rupture Fm, au plus égal à 0.2%. Par ailleurs, un renfort métallique non extensible a un module élastique en extension compris usuellement entre 150 GPa et 200 GPa.

Parmi les couches de sommet, on distingue usuellement les couches de protection, constitutives de l'armature de protection et radialement les plus à l'extérieur, généralement élastiques et les couches de travail inextensibles (WO2007/003562A1), constitutives de l'armature de travail et radialement comprises entre l'armature de protection et l'armature de carcasse.

L'armature de protection, comprenant au moins une couche de protection, protège essentiellement les couches de travail des agressions mécaniques ou physico-chimiques, susceptibles de se propager à travers la bande de roulement radialement vers l'intérieur du pneumatique.

L'armature de protection comprend souvent deux couches de protection, radialement superposées, formées de renforts métalliques élastiques, parallèles entre eux dans chaque couche et croisés d'une couche à la suivante, en formant, avec la direction circonférentielle, des angles au moins égaux à 10°.

L'armature de travail, comprenant au moins deux couches de travail, a pour fonction de ceinturer le pneumatique et de lui conférer de la rigidité et de la tenue de route. Elle reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. Elle doit en outre résister à l'oxydation et aux chocs et perforations, grâce à sa conception intrinsèque et à celle de l'armature de protection.

L'armature de travail comprend usuellement deux couches de travail, radialement superposées, formées de renforts métalliques non extensibles, parallèles entre eux dans chaque couche et croisés d'une couche à la suivante, en formant, avec la direction circonférentielle, des angles au plus égaux à 60°, et, de préférence, au moins égaux à 15° et au plus égaux à 45°. Pour diminuer les cisaillements des composés caoutchouteux aux extrémités axiales des couches de travail, il est usuel de décaler axialement la position desdites extrémités l'une par rapport à l'autre. L'armature de sommet comporte donc usuellement une couche de travail de plus grande largeur axiale et une couche de travail de plus petite largeur axiale. Les cisaillements des composés caoutchouteux sont maximaux à l'extrémité de la couche de travail de plus petite largeur axiale. En effet ces cisaillements maximaux dus aux déplacements de l'extrémité de la couche de travail de plus petite largeur axiale se répartissent sur l'épaisseur radiale de composés caoutchouteux entre la couche de travail de plus petite largeur axiale et la couche de travail de plus grande largeur axiale. Ces cisaillements sont amplifiés par les déformations de la couche de travail de plus grande largeur axiale. En effet, étant donné l'angle des renforts métalliques croisés avec les renforts métalliques de la couche de travail de plus petite largeur, la couche de travail de plus grande largeur axiale se déforme dans une autre direction, ce qui augmente les déformations des composés caoutchouteux. Ces maximas de cisaillements sont généralement diminués en ajoutant une gomme de découplage entre l'extrémité de la couche de travail de plus petite largeur axiale et la couche de travail de plus grande largeur axiale. L'extrémité de la couche de travail de plus grande largeur axiale est également soumise à de forts cisaillements mais généralement de moindre amplitude étant donné que pour cette extrémité, l'épaisseur des composés caoutchouteux est plus importante et les déformations ne sont plus amplifiées par la présence de l'autre couche de travail.

Pour diminuer les sollicitations mécaniques de gonflage et de roulage transmises à l'armature de travail et les cisaillements du composé caoutchouteux qui les recouvre, il est connu de disposer, radialement à l'extérieur de l'armature de carcasse, une armature de frettage. L'armature de frettage, dont la fonction est de reprendre au moins en partie les sollicitations mécaniques de gonflage, améliore l'endurance de l'armature de sommet par une rigidification de l'armature de sommet. L'armature de frettage peut être positionnée radialement à l'intérieur de l'armature de travail, entre les deux couches de travail de l'armature de travail, ou radialement à l'extérieur de l'armature de travail.

Dans les applications de type génie Civil, l'armature de frettage peut comprendre deux couches de frettage, radialement superposées, formées de renforts métalliques, parallèles entre eux dans chaque couche et croisés d'une couche à la suivante, en formant, avec la direction circonférentielle, des angles au plus égaux à 10°.

Dans les applications de type poids-lourd pour transport de charge, l'armature de frettage comprend usuellement une couche de frettage réalisée par l'enroulement circonférentiel d'un fil de frettage ou d'une bande de frettage continue en formant, avec la direction circonférentielle, des angles au plus égaux à 5°.

Dans les deux cas, les couches de frettage sont de plus petite largeur axiale que la couche de travail de plus petite largeur axiale. En effet les sollicitations dues au roulage en extrémité sont très élevées en traction et compression et amènent à la rupture des renforts métalliques disposés autour des extrémités des couches de travail. Le document WO2014/095099, divulgue une bande de recouvrement d'épaulement dont la largeur est limitée en raison de ces sollicitations. Même en utilisant des câbles élastiques, connus dans l'état de l'art, le phénomène de flambement au roulage et la forte consommation de l'As du renfort lors du moulage des pneumatiques pour les pneumatiques pour véhicules lourds rendent ces solutions peu satisfaisantes. En effet les pneumatiques pour véhicule lourd ont une hauteur de sculpture importante au moins égal à 10 mm pour les pneumatiques poids-Lourd et parfois beaucoup plus pour les pneumatiques agricoles et de génie-civil, notamment aux épaules du pneumatique. Il est nécessaire au moulage, d'enfoncer le composé caoutchouteux de la bande de roulement dans le moule. Pour cela, avant cuisson le pneumatique est à un diamètre inférieur et la pression de moulage vient déplacer le sommet d'un rayon proche de la hauteur sculpture. Les couches de travail se déforment facilement en raison de l'angle des renforts, le composé caoutchouteux des couches de travail absorbant la déformation. Pour les couches de frettage, on facilite leur déformation en utilisant des renforts métalliques élastiques ou en utilisant des couches de frettage aux renforts métalliques discontinus. Cependant à l'épaule, il est nécessaire d'avoir des propriétés élastiques plus importantes qu'au centre et la solution proposée doit être améliorée pour être réellement intéressante.

Un pneumatique pour véhicule de type poids-lourd, génie civil ou agricole est divulgué dans le document WO 2007/003562A.

Les inventeurs se sont donnés pour objectif, pour un pneumatique radial pour véhicule de type génie civil, poids-lourd ou agricole, de diminuer le risque de fissuration des composés caoutchouteux aux extrémités des couches de travail du pneumatique en roulage tout en diminuant les risques de rupture des éléments de renforts d'une couche de frettage radialement extérieure.

Cet objectif a été atteint, selon l'invention, par un pneumatique pour véhicule de type poids-lourd, génie civil ou agricole comprenant :

- un plan circonférentiel médian, dit plan équateur, perpendiculaire à l'axe de rotation du pneumatique et divisant le pneumatique en deux demi tores sensiblement symétriques,
- une armature de sommet, radialement intérieure à une bande de roulement et radialement extérieure à une armature de carcasse,
- l'armature de sommet comprenant, au moins une armature de travail, l'armature de sommet comprenant au moins deux couches de travail, une de plus grande largeur axiale et une de plus petite largeur axiale,
- chaque couche de travail comprenant des éléments de renforts, non extensibles, parallèles entre eux, en formant, avec la direction circonférentielle, des angles orientés au moins égaux à 15° et au plus égaux à 40°, les deux angles des deux couches de travail étant de signe opposé,
- une distance axiale Ds étant la valeur maximale des distances axiales mesurées de part et d'autre du plan équateur entre l'extrémité axiale de la couche de travail de plus petite largeur axiale et l'extrémité axiale de la couche de travail de plus grande largeur axiale,
- l'armature de sommet comprenant de part et d'autre du plan équateur au moins une couche de frettage radialement extérieure à la couche de travail la plus radialement extérieure, dite couche de frettage radialement extérieure hyperélastique, dont l'extrémité axiale la plus axialement extérieure est axialement extérieure à l'extrémité axiale de la couche de travail de plus petite largeur axiale d'une distance axiale au moins égale à Ds/2 et dont le point le plus axialement intérieur est axialement intérieur à l'extrémité axiale de la couche de travail de plus petite largeur axiale, d'une distance axiale au moins égale à Ds/2,
- ladite couche de frettage radialement extérieure hyperélastique, de part et d'autre du plan équateur, comprenant des renforts métalliques hyperélastiques, parallèles entre eux et formant, avec une direction circonférentielle (XX') du pneumatique, un angle au plus égal à 5°, chaque renfort métallique hyperélastique comprenant au moins un câble, dit hyperélastique,
- les dits câbles hyperélastiques comprenant une unique couche constituée de N éléments filaires métalliques enroulés en hélice et présentant un diamètre externe D, chaque élément filaire métallique de la couche décrivant, lorsque le câble s'étend selon une direction sensiblement rectiligne, une trajectoire en forme d'hélice autour d'un axe principal (A) sensiblement parallèle à la direction sensiblement rectiligne, de sorte que, dans un plan de coupe sensiblement perpendiculaire à l'axe principal (A), la distance entre le centre de chaque élément filaire métallique de la couche et l'axe principal (A) est égale à la moitié du diamètre d'hélice Dh et est sensiblement constante et égale pour tous les éléments filaires métalliques de la couche, les éléments filaires métalliques définissant une voûte interne du câble de diamètre Dv, chaque élément filaire métallique présentant un diamètre Df et un rayon de courbure d'hélice Rf défini par Rf=P/($\pi \times$ Sin(2$\alpha$)) avec P le pas de chaque élément filaire métallique exprimé en millimètres et $\alpha$ l'angle d'hélice de chaque élément filaire métallique, caractérisé en ce que, Dh, D, Dv, Df et Rf étant exprimés en millimètres :

- $$9 \leq Rf\,/\,Df \leq 30,$$

* $$1{,}30 \leq Dv\,/\,Df \leq 4{,}5,$$

et

$$Dv = Dh\text{-}Df,$$

- lesdits câbles hyperélastiques étant noyés dans un composé caoutchouteux.

Les inventeurs, ont diminué le risque de fissuration des composés caoutchouteux du sommet sans dégrader les autres performances, en utilisant comme renfort métallique d'une couche de frettage radialement extérieure soit directement un câble hyperélastique ou un multi-toron de câbles hyperélastiques, les dits câbles hyperélastiques ayant des caractéristiques géométriques particulières. La couche de frettage est dite radialement extérieure car elle est toujours radialement extérieure aux couches de travail. Elle est dite hyperélastique car ses renforts métalliques sont hyperélastiques.

Le diamètre de voûte Dv des renforts métalliques hyperélastiques de la couche de frettage radialement extérieure hyperélastique doit être suffisamment grand par rapport au diamètre des éléments filaires métalliques Df pour permettre une déformation en compression améliorant la résistance au flambement et suffisamment faible pour définir l'épaisseur de la couche de frettage radialement extérieure hyperélastique compatible avec des objectifs de limitation de la masse des pneumatiques et donc des ressources en matériaux nécessaires à leur réalisation. De même le rayon de courbure d'hélice Rf doit être suffisamment petit par rapport au diamètre des éléments filaires métalliques Df pour donner un allongement structurel important qui sera utilisé lors du moulage du pneumatique et suffisamment grand pour obtenir une résistance à la rupture linéique de la couche de frettage radialement extérieure hyperélastique adéquate pour ne pas rompre sous la sollicitation en roulage notamment sous un effort transverse sous dérive.

De tels câbles ont l'avantage sur les câbles classiques élastiques hybrides ou non d'avoir non seulement une grande élasticité en traction mais aussi une bonne résistance au flambement. La zone des extrémités de la couche de travail est en effet notamment en virage, sous effort transverse, sollicitée longitudinalement en traction et en compression de part et d'autre du plan équateur.

Les valeurs des caractéristiques Df, Dv et Rf ainsi que des autres caractéristiques décrites ci-dessous sont mesurées sur ou déterminées à partir des câbles soit directement après fabrication, c'est-à-dire avant toute étape de noyage dans une matrice élastomérique, soit extraits d'une matrice élastomérique, par exemple d'un pneumatique, et ayant alors subi une étape de nettoyage durant laquelle on retire du câble toute matrice élastomérique, notamment tout matériau présent à l'intérieur du câble. Pour garantir un état d'origine, l'interface adhésive entre chaque élément filaire métallique et la matrice élastomérique doit être supprimée, par exemple par procédé électro-chimique dans un bain de carbonate de sodium. Les effets associés à l'étape de conformation du procédé de fabrication du pneumatique décrits ci-dessous, notamment l'allongement des câbles, sont annulés par l'extraction de la nappe et du câble qui reprennent, lors de l'extraction, sensiblement leurs caractéristiques d'avant l'étape de conformation.

Le câble selon l'invention comprend une unique couche d'éléments filaires métalliques enroulés en hélice. En d'autres termes, le câble selon l'invention comprend une seule, pas deux, ni plus de deux couches d'éléments filaires métalliques enroulés en hélice. La couche est constituée d'éléments filaires métalliques, c'est-à-dire plusieurs éléments filaires métalliques, pas d'un seul élément filaire métallique. Dans un mode de réalisation du câble, par exemple lorsque le câble est issu de son procédé de fabrication, le câble selon l'invention est constitué de la couche d'éléments filaires métalliques enroulés.

Le câble selon l'invention est à simple hélice. Par définition, un câble à simple hélice est un câble dans lequel l'axe de chaque élément filaire métallique de la couche décrit une unique hélice, contrairement à un câble à double hélice dans lequel l'axe de chaque élément filaire métallique décrit une première hélice autour de l'axe du câble et une deuxième hélice autour d'une hélice décrite par l'axe du câble. En d'autres termes, lorsque le câble s'étend selon une direction sensiblement rectiligne, le câble comprend une unique couche d'éléments filaires métalliques enroulés ensemble en hélice, chaque élément filaire métallique de la couche décrivant une trajectoire en forme d'hélice autour de la direction sensiblement rectiligne de sorte que la distance entre le centre de chaque élément filaire métallique de la couche et l'axe de la direction sensiblement rectiligne soit sensiblement constante et égale pour tous les éléments filaires métalliques de la couche. Au contraire, lorsqu'un câble à double hélice s'étend selon une direction sensiblement rectiligne, la distance entre le centre de chaque élément filaire métallique de la couche et la direction sensiblement rectiligne est différente pour tous les éléments filaires métalliques de la couche.

Le câble selon l'invention est dépourvu d'âme centrale métallique. On parle également de câble de structure $1 \times N$ dans laquelle N est le nombre d'éléments filaires métalliques ou bien encore de câble à structure ouverte (« open-cord » en anglais).

La voûte du câble selon l'invention est délimitée par les éléments filaires métalliques et correspond au volume délimité par un cercle théorique, d'une part, radialement intérieur à chaque élément filaire métallique et, d'autre part, tangent à chaque élément filaire métallique.

Par élément filaire, on entend un élément s'étendant longitudinalement selon un axe principal et présentant une section perpendiculaire à l'axe principal dont la plus grande dimension G est relativement faible par rapport à la dimension L selon l'axe principal. Par relativement faible, on entend que L/G est supérieur ou égal à 100, de préférence supérieur ou égal à 1000. Cette définition couvre aussi bien les éléments filaires de section circulaire que les éléments filaires de section non circulaire, par exemple de section polygonale ou oblongue. De façon très préférée, chaque élément filaire métallique présente une section circulaire.

Par métallique, on entend par définition un élément filaire constitué majoritairement (c'est-à-dire pour plus de 50% de sa masse) ou intégralement (pour 100% de sa masse) d'un matériau métallique. Chaque élément filaire métallique est préférentiellement en acier, plus préférentiellement en acier perlitique ou ferrito-perlitique au carbone, appelé couramment par l'homme du métier acier au carbone, ou encore en acier inoxydable (par définition, acier comportant au moins 10,5% de chrome).

L'angle d'hélice $\alpha$ est une grandeur bien connue de l'homme du métier et peut être déterminé par le calcul itératif suivant comprenant 3 itérations et dans lequel l'indice i indique le numéro de l'itération 1, 2 ou 3. Connaissant l'allongement structural As exprimé en %, l'angle d'hélice $\alpha(i)$ est tel que $\alpha(i)=\text{Arcos} [ (100/(100+\text{As}) \times \text{Cos} [ \text{Arctan} ( (\pi \times \text{Df}) / (\text{P} \times \text{Cos}(\alpha(i-1)) \times \text{Sin}(\pi/\text{N})) ] ]$, formule dans laquelle P est le pas exprimé en millimètres auquel chaque élément filaire métallique est enroulé, N est le nombre d'éléments filaires métalliques de la couche, Df est le diamètre de chaque élément filaire métallique exprimé en millimètres, Arcos, Cos et Arctan et Sin désignant respectivement les fonctions arcosinus, cosinus, arctangente et sinus. Pour la première itération, c'est-à-dire pour le calcul de $\alpha(1)$, on prend $\alpha(0)=0$. A la troisième itération, on obtient $\alpha(3)=\alpha$ avec au moins un chiffre significatif après la virgule quand $\alpha$ est exprimé en degrés.

Le diamètre d'hélice Dh, exprimé en millimètres, est calculé selon la relation $\text{Dh}=\text{P} \times \text{Tan}(\alpha) / \pi$ dans laquelle P est le pas exprimé en millimètres auquel chaque élément filaire métallique est enroulé, $\alpha$ est l'angle d'hélice de chaque élément filaire métallique déterminé ci-dessus et Tan la fonction tangente. Le diamètre d'hélice Dh correspond au diamètre du cercle théorique passant par les centres des éléments filaires métalliques de la couche dans un plan perpendiculaire à l'axe du câble.

Le diamètre de voûte Dv, exprimé en millimètres, est calculé selon la relation $\text{Dv}=\text{Dh}-\text{Df}$ dans laquelle Df est le diamètre de chaque élément filaire métallique et Dh le diamètre d'hélice, tous deux exprimés en millimètres.

Le rayon de courbure Rf, exprimé en millimètres, est calculé selon la relation $\text{Rf}=\text{P}/(\pi \times \text{Sin}(2\alpha))$ dans laquelle P est le pas exprimé en millimètres, $\alpha$ est l'angle d'hélice de chaque élément filaire métallique et Sin la fonction sinus.

On rappelle que le pas auquel chaque élément filaire métallique est enroulé est la longueur parcourue par cet élément filaire, mesurée parallèlement à l'axe du câble dans lequel il se trouve, au bout de laquelle l'élément filaire ayant ce pas effectue un tour complet autour dudit axe du câble.

Les caractéristiques optionnelles décrites ci-dessous pourront être combinées les unes avec les autres dans la mesure où de telles combinaisons sont techniquement compatibles.

Dans un mode de réalisation avantageux, tous les éléments filaires métalliques présentent le même diamètre Df.

Par orientation d'un angle, on entend le sens, horaire ou anti-horaire, dans lequel il faut tourner à partir d'une droite de référence, ici la direction circonférentielle du pneumatique, définissant l'angle pour atteindre l'autre droite définissant l'angle.

Dans des modes de réalisation préférés, $9 \leq \text{Rf} / \text{Df} \leq 25$. Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $9 \leq Rf/Df \leq 15$.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $1,70 \leq Dv/Df \leq 2,50$.

Avantageusement, le rayon de courbure d'hélice Rf est tel que $2\ mm \leq Rf \leq 7\ mm$. Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $4\ mm \leq Rf \leq 6\ mm$ et de préférence $4\ mm \leq Rf \leq 5\ mm$.

Dans un mode de réalisation d'un câble destiné au renforcement d'un pneumatique pour véhicules hors-la-route, par exemple des engins agricoles ou de génie civil, on a $4\ mm \leq Rf \leq 7\ mm$ et de préférence $4,5\ mm \leq Rf \leq 6,5\ mm$.

Avantageusement, le diamètre d'hélice Dh de chaque élément filaire métallique est tel que $0,40\ mm \leq Dh \leq 1,60\ mm$.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $0,85\ mm \leq Dh \leq 1,60\ mm$ et de préférence $0,90\ mm \leq Dh \leq 1,60\ mm$.

Dans un mode de réalisation d'un câble destiné au renforcement d'un pneumatique pour véhicules hors-la-route, par exemple des engins agricoles ou de génie civil, on a $0,95\ mm \leq Dh \leq 1,40\ mm$ et de préférence $1,00\ mm \leq Dh \leq 1,35\ mm$.

Avantageusement, Df est tel que $0,10\ mm \leq Df \leq 0,50\ mm$.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $0,22\ mm \leq Df \leq 0,50\ mm$ et de préférence $0,25\ mm \leq Df \leq 0,45\ mm$.

Dans un mode de réalisation d'un câble destiné au renforcement d'un pneumatique pour véhicules hors-la-route, par exemple des engins agricoles ou de génie civil, on a $0,32\ mm \leq Df \leq 0,50\ mm$ et de préférence $0,35\ mm \leq Df \leq 0,50\ mm$.

Avantageusement, Dv est tel que $Dv \geq 0,46\ mm$, et plus préférentiellement $0,50\ mm \leq Dv \leq 1,20\ mm$.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $0,65\ mm \leq Dv \leq 0,80\ mm$.

Dans un mode de réalisation d'un câble destiné au renforcement d'un pneumatique pour véhicules hors-la-route, par exemple des engins agricoles ou de génie civil, on a $0,55\ mm \leq Dv \leq 1,00\ mm$.

Avantageusement, chaque élément filaire métallique est enroulé à un pas P tel que $3\ mm \leq P \leq 15\ mm$.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $7\ mm \leq P \leq 15\ mm$, préférentiellement $7,5\ mm \leq P \leq 11\ mm$.

Dans un mode de réalisation d'un câble destiné au renforcement d'un pneumatique pour véhicules hors-la-route, par exemple des engins agricoles ou de génie civil, on a $9\ mm \leq P \leq 15\ mm$.

Avantageusement, le câble présente un diamètre D tel que $D \leq 2,10\ mm$.

Le diamètre ou diamètre apparent, noté D, est mesuré au moyen d'un comparateur d'épaisseur dont le diamètre des touches est au moins égal à 1,5 fois le pas P d'enroulage des éléments filaires (on peut citer par exemple le modèle JD50 de la marque KAEFER permettant d'atteindre une précision de 1/100 de millimètre, équipé de touche type a, et ayant une pression de contact proche de 0,6N). Le protocole de mesure consiste en trois répétitions d'une série de trois mesures (effectuées perpendiculairement à l'axe du câble et sous tension nulle) dont la seconde et la troisième de ces mesures sont réalisées selon une direction décalée angulairement de la précédente d'un tiers de tour, par la rotation de la direction de mesure autour de l'axe du câble.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $1,15\ mm \leq D \leq 1,55\ mm$.

Dans un mode de réalisation d'un câble destiné au renforcement d'un pneumatique pour véhicules hors-la-route, par exemple des engins agricoles ou de génie civil, on a $1,5\ mm \leq D \leq 2\ mm$.

Dans un mode de réalisation, chaque élément filaire métallique comprend un unique monofilament métallique. Ici, chaque élément filaire métallique est avantageusement constitué d'un monofilament métallique. Dans une variante de ce mode de réalisation, le monofilament métallique est directement revêtu d'une couche d'un revêtement métallique comprenant du cuivre, du zinc, de l'étain, du cobalt ou un alliage de ces métaux, par exemple le laiton ou le bronze. Dans cette variante, chaque élément filaire métallique est alors constitué du monofilament métallique, par exemple en acier, formant une âme, directement revêtu de la couche de revêtement métallique.

Dans ce mode de réalisation, chaque monofilament élémentaire métallique est, comme décrit-ci-dessus, de préférence en acier, et présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle le câble est destiné à être noyé et un allègement de la matrice ainsi renforcée.

Avantageusement, la couche étant constituée de N éléments filaires métalliques enroulés en hélice, N va de 3 à 18, de préférence de 5 à 12 et plus préférentiellement de 6 à 9.

L'objectif de ladite couche de frettage radialement extérieure hyperélastique est de diminuer les cisaillements maximaux dans les composés caoutchouteux à proximité de l'extrémité de la couche de travail de plus petite largeur axiale. Pour diminuer ces sollicitations, les concepteurs séparent les deux extrémités de ces couches de travail d'une longueur Ds. La longueur Ds est donc telle que si cette distance est respectée entre les extrémités, les sursollicitations liées aux deux extrémités ne se surajoutent pas de manière dommageable. Ds/2 est donc de l'ordre de grandeur de la distance d'influence des sursollicitations aux extrémités. Il est donc intéressant que la couche de frettage radialement extérieure hyperélastique soit positionnée de part et d'autre de l'extrémité de la couche de travail de plus petite largeur axiale sur une distance d'au moins Ds/2 pour diminuer les cisaillements sur toute cette zone.

Avantageusement, de part et d'autre du plan équateur, l'extrémité axiale la plus axialement extérieure de la couche de frettage radialement extérieure hyperélastique, est axialement extérieure à l'extrémité axiale de la couche de travail de plus grande largeur axiale, d'une distance au moins égale à Ds/2 de manière à diminuer les cisaillements également au niveau de l'extrémité de la couche de travail de plus grande largeur axiale. Dans une telle configuration, la couche de frettage radialement extérieure hyperélastique diminuant les risques de fissuration des composés caoutchouteux autour des extrémités des couches de travail et étant composée d'un câble ou toron hyperélastique en capacité de supporter des grandes déformations comme celles dues à des obstacles sur le sol de roulage propres à causer des ruptures de sommet, elle peut faire office de couche de protection dans cette zone. Dès lors pour diminuer la masse de la couche de protection d'un pneumatique comprenant une armature de protection radialement extérieure à l'armature de travail comprenant au moins une couche de protection et donc du pneumatique, il est avantageux, si la couche de frettage radialement extérieure hyperélastique comprend une extrémité axialement intérieure, que de part et d'autre du plan équateur, l'extrémité axiale de la couche de protection de plus grande largeur axiale soit axialement intérieure à l'extrémité axiale la plus axialement intérieure de la couche de frettage radialement extérieure hyperélastique.

Sur la partie axialement extérieure de la couche de frettage radialement extérieure hyperélastique, il existe obligatoirement une extrémité de cette couche. Sur la partie axialement intérieure de la couche de frettage radialement extérieure hyperélastique, il est possible de disposer une couche de frettage radialement extérieure hyperélastique qui aille sans discontinuer depuis une première extrémité axialement extérieure, traversant le plan équateur jusqu'à l'autre extrémité axialement extérieure située de l'autre côté du plan équateur du pneumatique. Dans ce cas-là, de chaque côté du plan équateur, le point le plus axialement intérieur se situe sur le plan équateur, bien qu'il n'y ait pas d'extrémité axialement intérieure de la couche de frettage radialement extérieure.

Si la couche de frettage radialement extérieure hyperélastique ne comprend pas d'extrémité axialement intérieure et est donc de pleine largeur, il est avantageux selon le type de pneumatiques et les sollicitations qu'ils subissent soit de supprimer la couche de protection soit d'en diminuer le nombre.

Avantageusement, le rapport K du pas P sur le diamètre Df de chaque élément filaire métallique, desdits câbles hyperélastiques, est tel que $19 \leq K \leq 44$, de préférence $20 \leq K \leq 40$ et plus préférentiellement $23 \leq K \leq 39$, P et Df étant exprimés en millimètres. Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $19 \leq K \leq 35$ et de préférence $23 \leq K \leq 30$.

Avantageusement, l'angle d'hélice $\alpha$ de chaque élément filaire métallique est tel que $13° \leq \alpha \leq 30°$, de préférence $17° \leq \alpha \leq 26°$. Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $18,5° \leq \alpha \leq 30°$ et de préférence $18,5° \leq \alpha \leq 26°$.

Pour des valeurs trop élevées du rapport K ou pour des valeurs d'angle d'hélice trop faibles, la compressibilité longitudinale du câble est réduite. Pour des valeurs trop faibles du rapport K ou pour des valeurs d'angle d'hélice trop élevées, la rigidité longitudinale du câble et donc sa capacité de renforcement sont réduites.

Avantageusement, le câble présente un allongement structural As tel que $As \geq 1\%$, de préférence $As \geq 2,5\%$, plus préférentiellement $As \geq 3\%$.

Enfin, le jeu radial relatif Jr est représentatif de la distance séparant chaque paire d'éléments filaires métalliques adjacents ramenée à la longueur disponible pour positionner les éléments filaires métalliques sur la couche. Plus précisément, $Jr = N/(\pi*(D-Df)) \times (Dh \times Sin(\pi/N) - (Df / Cos(\alpha \times \pi/180)))$, $\alpha$ étant l'angle d'hélice, exprimé en degrés, de chaque élément filaire métallique (54) et $Dv = Dh - Df$. Plus Jr est élevé, plus l'espace séparant deux éléments filaires métalliques adjacents est élevé par rapport au nombre maximal d'éléments filaires métalliques que la couche pourrait accueillir. A l'inverse, plus Jr est petit, plus l'espace séparant deux éléments filaires métalliques adjacents est petit par rapport au nombre maximal d'éléments filaires métalliques que la couche pourrait accueillir. Dans l'intervalle selon l'invention, Jr permet de maximiser le nombre d'éléments filaires métalliques présents sur la couche et donc la capacité de renforcement du câble sans toutefois détériorer la capacité d'accommodation des déformations de compression longitudinale.

Avantageusement, le jeu radial relatif entre deux éléments filaire adjacents, Jr des dits câbles hyperélastiques compris dans les renforts métalliques élastiques de la couche de frettage radialement extérieure hyperélastique est tel que $0,10 \leq Jr \leq 0,60$, de préférence $0,30 \leq Jr \leq 0,60$. Le jeu radial relatif entre deux éléments filaires adjacents permet de régler l'aération du câble et l'équilibre dans ce type d'application. Un câble trop peu aéré aura un comportement proche des câbles classiques et n'apportera pas le même niveau de gain en performance. Un câble trop aéré, au-delà d'un jeu relatif de 0,6, se déformera facilement mais n'opposera pas une résistance aux efforts longitudinaux en traction ou en compression.

Selon le type de pneumatiques conçus, selon le besoin de résistance à la traction pour chaque utilisation spécifique, camionnette, poids-lourd, génie-civil dont les dimensions varient du 16 pouces à 63 pouces, chaque renfort métallique de la couche de frettage radialement extérieure hyperélastique, est constitué d'un unique câble hyperélastique tel que défini précédemment ou est composé de plusieurs desdits câbles, assemblés ensemble, à savoir, est un toron de câbles hyperélastiques. En effet, l'assemblage de plusieurs câbles hyperélastiques garde les propriétés en compression du câble hyperélastique.

Préférentiellement, pour une performance correcte en endurance des renforts métalliques de la couche de frettage radialement extérieure hyperélastique, les renforts métalliques hyperélastiques de ladite couche de frettage radialement extérieure hyperélastique ont un module sécant à 2% d'allongement au plus égal à 80 GPa et un allongement à rupture au moins égal à 4%.

Avantageusement pour une performance correcte en endurance des renforts de la couche de frettage radialement extérieure hyperélastique, les renforts métalliques hyperélastiques de ladite couche de frettage radialement extérieure hyperélastique, ont une valeur de déformation de flambement en compression au moins égale à 2%.

Préférentiellement de part et d'autre du plan équateur, la couche de frettage radialement extérieure hyperélastique est constituée par l'enroulement circonférentiel d'un renfort métallique hyperélastique ou d'une bande constituée de plusieurs renforts métalliques hyperélastiques, ce qui permet de diminuer, par rapport à une couche de renforts non continus, le nombre d'extrémités de câbles ou de torons qui sont autant de points d'initiation privilégiés d'une fissure et d'utiliser tout le potentiel de résistance des renforts métalliques circonférentiellement.

Pour les pneumatiques pour véhicule lourd de type génie civil, selon un mode de réalisation préféré des couches de protection, les renforts métalliques élastiques des couches de protection forment, avec la direction circonférentielle, un angle au moins égal à 15° et au plus égal à 35°.

Pour les pneumatiques pour véhicule lourd de type génie civil, un mode de réalisation préférée comprend deux couches de protection comportant des renfots métalliques élastiques ou hyperélastiques. Plus avantageusement les renforts métalliques respectifs des deux couches de protection sont croisés d'une couche de protection à la suivante. Plus avantageusement pour des gains de productivité, les renforts métalliques de la couche de protection la plus radialement intérieure, forment avec la direction circonférentielle (XX'), un angle égal en valeur absolue à l'angle formé par les renforts métalliques de la couche de protection la plus radialement extérieure avec la direction circonférentielle (XX'). Et plus avantageusement, pour avoir un comportement homogène dans la répartition des efforts repris par chacune des couches de l'armature de sommet, la valeur absolue des angles formés par les renforts métalliques des couches de protection avec la direction circonférentielle, est sensiblement égale à la moyenne des valeurs absolues des angles formés par les renforts métalliques des couches de travail avec la direction circonférentielle (XX').

Le pneumatique peut comprendre une armature de protection radialement extérieure à l'armature de travail comprenant au moins une couche de protection. Selon un mode de réalisation préféré de l'armature de sommet, pour améliorer la performance au martellement, à savoir la fissuration des matériaux caoutchouteux, la couche de protection la plus radialement intérieure a une largeur axiale LP1 au moins égale à 1.05 fois et au plus égale à 1.25 fois la largeur axiale maximale LTmax de la couche de travail ayant la plus grande largeur axiale. En deçà de 1.05 fois la largeur axiale LTmax, la couche de protection la plus radialement intérieure n'est pas suffisamment débordante par rapport à la couche de travail de plus grande largeur axiale pour pouvoir assurer un rôle de protection efficace vis-à-vis du martèlement. Au-delà de 1.25 fois la largeur axiale LTmax, l'extrémité axiale de la couche de protection la plus radialement intérieure est très proche de l'extrémité axiale de la bande de roulement, ce qui augmente le risque de fissuration entre l'extrémité axiale de ladite couche de protection et l'extrémité axiale de la bande de roulement.

Selon un mode de réalisation préféré de l'armature de sommet d'un pneumatique de génie civil, l'armature de sommet comprend une armature de frettage comprenant deux couches de frettage radialement intérieur à la couche de travail la plus radialement extérieure dont les renforts métalliques respectifs, enrobés dans un matériau élastomérique, parallèles entre eux et formant, avec la direction circonférentielle, un angle au plus égal à 10°, sont croisés d'une couche de frettage à la suivante. On distingue usuellement les couches de frettage à angle, avec des renforts formant des angles au moins égaux à 5° et au plus égaux à 8°, et les couches de frettage circonférentiel, avec des renforts sensiblement circonférentiels formant des angles voisins de 0° et au plus égaux à 5°. Les renforts métalliques de couche de frettage peuvent être soit élastiques, soit non extensibles. L'armature de frettage peut être positionnée radialement à l'intérieur de l'armature de travail, entre les deux couches de travail de l'armature de travail.

Les caractéristiques de l'invention sont illustrées par les figures 1 à 4 schématiques et non représentées à l'échelle, en référence à un pneumatique de dimension 53/80R63 :

- figure 1 : coupe méridienne d'un sommet de pneumatique selon l'invention.
- figure 2 : coupe méridienne d'un sommet de pneumatique selon l'invention.
- figure 3 : coupe méridienne d'un sommet de pneumatique selon l'invention.
- figure 4 : coupe transverse d'un câble hyperélastique composant toute ou partie des renforts métalliques de l'armature de protection selon l'invention.

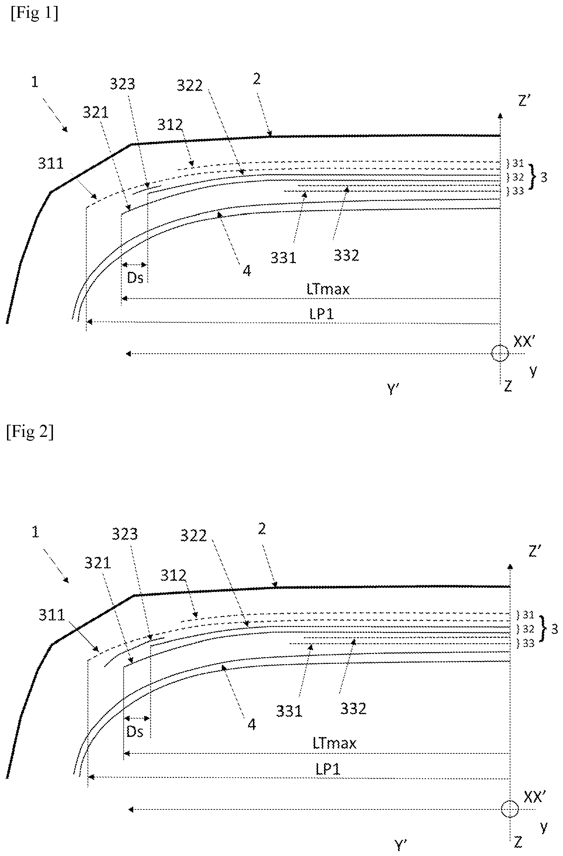

Sur la figure 1, est représentée une coupe méridienne d'un pneumatique 1 pour véhicule lourd de type génie civil comprenant une armature de sommet 3, radialement intérieure à une bande de roulement 2 et radialement extérieure à une armature de carcasse 4. L'armature de sommet 3 comprend, radialement de l'extérieur vers l'intérieur, une armature de protection 31, une armature de travail 32 et une armature de frettage 33. L'armature de protection 31 comprend deux couches de protection (311, 312) comprenant des renforts métalliques élastiques enrobés dans un matériau élastomérique, parallèles entre eux et formant un angle égal à 24°, avec une direction circonférentielle XX' tangente à la circonférence du pneumatique, les renforts métalliques respectifs de chaque couche de protection étant croisés d'une couche de protection à la suivante. L'armature de travail 32 comprend deux couches de travail 321, 322 dont les renforts métalliques respectifs non extensibles, enrobés dans un matériau élastomérique, parallèles entre eux et formant, avec la direction circonférentielle XX', des angles respectivement égaux à 33°, pour la couche de travail la plus radialement intérieure 321 qui est également circonstantiellement la couche de travail de plus grande largeur axiale, et 19°, pour la couche de travail la plus radialement extérieure 322 qui est également circonstantiellement la couche de travail de plus petite largeur axiale, sont croisés d'une couche de travail à la suivante. L'armature de travail comprend également une couche de frettage radialement extérieure hyperélastique 323 comprenant des câbles hyperélastiques, d'une largeur axiale au moins égale à Ds et disposée de telle sorte que l'extrémité axiale la plus axialement extérieure, est axialement extérieure à l'extrémité axiale de la couche de travail de plus petite largeur axiale (322) d'une distance axiale au moins égale à Ds/2 et que l'extrémité la plus axialement intérieure, est axialement intérieure à l'extrémité axiale de la couche de travail de plus petite largeur axiale (322), d'une distance axiale au moins égale à Ds/2. Les renforts métalliques hyperélastiques de la couche de frettage radialement extérieure hyperélastique sont un enroulement circonférentiel d'un câble hyperélastique formant avec la direction circonférentielle un angle de 0.5°. La couche de protection la plus radialement intérieure 311 est axialement débordante par rapport à la couche de travail de plus grande largeur axiale, ici la couche de travail la plus radialement intérieure 321. Dans le cas représenté, la largeur axiale LP1 est égale à 1.15 fois la largeur axiale LTmax. L'armature de frettage 33 comprend deux couches de frettage 331, 332 dont les renforts métalliques respectifs, enrobés dans un matériau élastomérique, parallèles entre eux et formant, avec la direction circonférentielle XX', un angle compris entre 5° et 10°, sont croisés d'une couche de frettage à la suivante.

La figure 2 est une variante de l'invention où l'extrémité axiale la plus axialement extérieure de la couche de frettage (323) radialement extérieure hyperélastique, est axialement extérieure à l'extrémité axiale de la couche de travail de plus grande largeur axiale (321), d'une distance au moins égale à Ds/2.

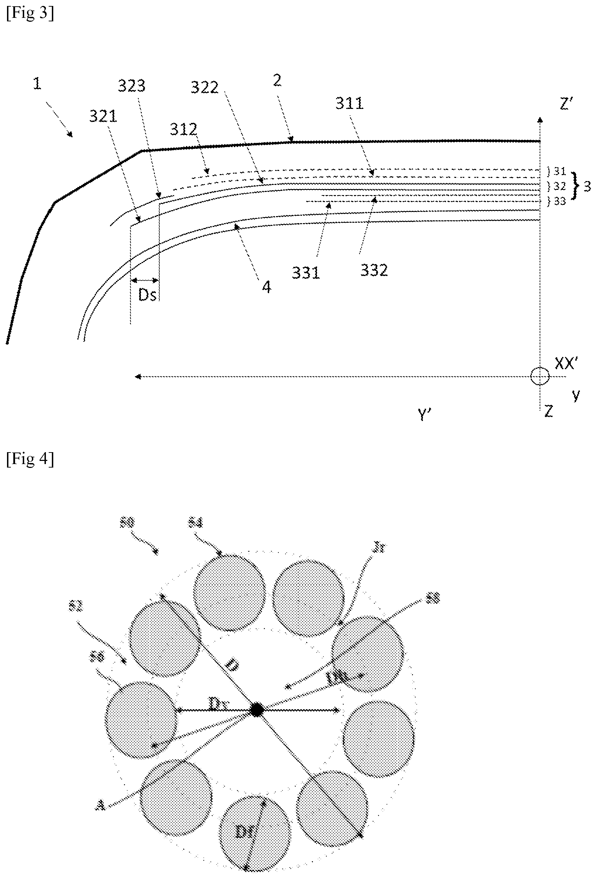

La figure 3 est une variante de l'invention où l'extrémité axiale la plus axialement extérieure de la couche de frettage (323) radialement extérieure hyperélastique, est axialement extérieure à l'extrémité axiale de la couche de travail de plus grande largeur axiale (321), d'une distance au moins égale à Ds/2 et l'extrémité axiale de la couche de protection de plus grande largeur axiale (311) est axialement intérieure à l'extrémité axiale la plus axialement intérieure de la couche de frettage radialement extérieure hyperélastique.

La figure 4 illustre les câbles entrant dans la réalisation des éléments de renfort des couches de frettage radialement extérieures hyperélastiques soit constituant l'éléments de renforts, soit étant un des câbles du toron que constitue l'élément de renfort de ladite couche de frettage. Le câble 50 selon l'invention comprend une unique couche 52 d'éléments filaires métalliques 54 enroulés en hélice. En l'espèce, le câble 50 est constitué de l'unique couche 52, autrement dit le câble 50 ne comprend pas d'autre élément filaire métallique que ceux de la couche 52. La couche 52 est constituée de 9 éléments filaires métalliques enroulés en hélice et étant noyés dans la matrice en composé caoutchouteux de la couche de frettage radialement extérieure hyperélastique, la voûte interne 58 étant elle-même remplie dudit composé caoutchouteux.

L'invention a été simulée sur des outils de calcul et sera testée sur des pneumatiques de dimension 24.00R35. Les simulations permettent d'évaluer les sollicitations mécaniques et thermiques sur des pneumatiques par la technique des éléments finis en grand déplacement et grande déformation en tenant compte des caractéristiques mécaniques et hystérétiques des matériaux. Les pneumatiques sont également comparés sur des tests de roulage sur des volants de 22 m de circonférence. On applique le même protocole de tests aux pneumatiques selon l'invention et aux pneumatiques de référence selon l'état de l'art.

Un premier test consiste en un roulage à angle de dérive nulle à une charge correspondant à l'indice de charge à la pression conseillée. La vitesse du test est 30 Km/h. Le résultat du test est le kilométrage du pneumatique avant sa perte de pression ou le déchapage du sommet. Ce premier test évalue la capacité en endurance du sommet à supporter les cycles de roulage qui génèrent une sollicitation cyclique de cisaillement sur la zone des extrémités des couches de travail avec une sollicitation thermique élevée et croissante qui sollicite essentiellement les composés caoutchouteux dans cette zone.

Un deuxième test consiste en un roulage à effort transverse imposé à la charge correspondant à l'indice de charge à la pression conseillée. L'effort transverse est égal à 30% de la charge, alterné, sur des temps de cycle de 10 mn. La vitesse du test est 15 Km/h. le résultat du test est le kilométrage du pneumatique avant sa perte de pression ou le déchapage du sommet. Ce test évalue la capacité en endurance du sommet à supporter les cycles de roulage sous dérive qui génèrent une sollicitation cyclique de traction compression élevée sur la zone des extrémités des couches de travail avec une sollicitation thermique moindre que le précédent, et sollicitant ainsi davantage les renforts métalliques.

Les pneumatiques de référence et selon l'invention sont identiques excepté l'armature de sommet par la présence d'une couche de frettage radialement extérieure hyperélastique sur le pneumatique selon l'invention. Ils ont la même sculpture et les mêmes renforts pour la couche de carcasse (4), les couches de frettage (331, 332), les couches de travail (321, 322) et les couches de protection et les mêmes composés caoutchouteux pour les différentes parties du pneumatiques.

Pour le pneumatique de référence, l'armature de sommet est composée radialement de l'extérieur vers l'intérieur de deux couches de protection, deux couches de travail, deux couches de frettage. La couche de protection la plus radialement extérieure est large de 400 mm, et ses renforts métalliques font un angle avec la direction circonférentielle de 24°. La couche de protection la plus radialement intérieure est large de 520 mm, et ses renforts métalliques font un angle avec la direction circonférentielle de -24°. La couche de travail la plus radialement extérieure est large de 380 mm, et ses renforts métalliques font un angle avec la direction circonférentielle de 19°. La couche de travail la plus radialement intérieure est large de 450 mm, et ses renforts métalliques font un angle avec la direction circonférentielle de -33°. La couche de frettage la plus radialement extérieure est large de 200 mm, et ses renforts métalliques font un angle avec la direction circonférentielle de 8°. La couche de frettage la plus radialement extérieure est large de 240 mm, et ses renforts métalliques font un angle avec la direction circonférentielle de -8°. Les renforts métalliques des couches de travail et frettage sont des renforts métalliques inextensibles 26.30, à savoir des câbles de 26 fils de 30 centièmes de mm de diamètre, disposés en trois couches, la couche centrale comprenant 3 fils, la seconde comprenant 9 fils et la couche extérieure comprenant 14 fils. Lesdits torons sont disposés à un pas de 3.4mm. Les renforts métalliques élastiques de l'armature de protection du pneumatique de référence sont des câbles 24.26, à savoir des torons de 4 câbles 6 fils de 26 centièmes de mm de diamètre. Lesdits torons sont disposés à un pas de 2.5 mm.

Le pneumatique selon l'invention comprend en plus de l'armature de sommet du pneumatique de référence, de part et d'autre du plan équateur, une couche de frettage radialement extérieure hyperélastique dont les renforts métalliques sont hyperélastiques. De part et d'autre du plan équateur, la couche de frettage radialement extérieure hyperélastique fait 35 mm de largeur axiale, égale à Ds et est centrée sur l'extrémité axiale de la couche de travail la plus radialement extérieure qui est également la couche de travail de plus petite largeur axiale.

Les renforts métalliques hyperélastiques de la couche de frettage radialement extérieure hyperélastique du pneumatique 1 selon l'invention, sont des 18.45, à savoir des torons selon l'invention, composés de 3 câbles comprenant 6 fils de diamètre Df de 45 centièmes de mm. Lesdits torons sont disposés à un pas de 4,8 mm. Le diamètre de voûte Dv des dits fils est égal à 1.11 mm. Le rayon de courbure d'hélice Rf est égal à 4,2 mm. Jr, le jeu radial relatif entre deux éléments filaires adjacents est égal à 0,35.

Les torons hyperélastiques ont un allongement structurel As au moins égal à 3%, un allongement total à rupture au moins égal à 8%.

Selon les calculs par éléments finis, le pneumatique 1 selon l'invention amène, un gain d'environ 15% de performance en kilométrage avant déchéance du pneumatique sur la fissuration des composés caoutchouteux autour des extrémités axiales des couches de travail comparativement au pneumatique de référence. L'invention telle que proposée permet donc d'améliorer l'endurance du pneumatique.

**Revendications**

1. Pneumatique (1) pour véhicule de type poids-lourd, génie civil ou agricole comprenant :

   • un plan circonférentiel médian, dit plan équateur, perpendiculaire à l'axe de rotation du pneumatique et divisant le pneumatique en deux demi tores sensiblement symétriques,

• une armature de sommet (3), radialement intérieure à une bande de roulement (2) et radialement extérieure à une armature de carcasse (4),

• l'armature de sommet (3) comprenant, au moins une armature de travail (32), l'armature de sommet comprenant au moins deux couches de travail (321, 322), une de plus grande largeur axiale (321) et une de plus petite largeur axiale (322),

• chaque couche de travail (321, 322) comprenant des éléments de renforts, non extensibles, parallèles entre eux, en formant, avec la direction circonférentielle, des angles orientés au moins égaux à 15° et au plus égaux à 40°, les deux angles des deux couches de travail étant de signe opposé,

• une distance axiale Ds étant la valeur maximale des distances axiales mesurées de part et d'autre du plan équateur entre l'extrémité axiale de la couche de travail de plus petite largeur axiale (322) et l'extrémité axiale de la couche de travail de plus grande largeur axiale (321),

• l'armature de sommet comprenant de part et d'autre du plan équateur au moins une couche de frettage radialement extérieure (323) à la couche de travail la plus radialement extérieure (321, 322), dite couche de frettage radialement extérieure hyperélastique, dont l'extrémité axiale la plus axialement extérieure est axialement extérieure à l'extrémité axiale de la couche de travail de plus petite largeur axiale (322) d'une distance axiale au moins égale à Ds/2 et dont le point le plus axialement intérieur est axialement intérieur à l'extrémité axiale de la couche de travail de plus petite largeur axiale (322), d'une distance axiale au moins égale à Ds/2,

• ladite couche de frettage radialement extérieure hyperélastique (323), de part et d'autre du plan équateur, comprenant des renforts métalliques hyperélastiques, parallèles entre eux et formant, avec une direction circonférentielle (XX') du pneumatique, un angle au plus égal à 5°, chaque renfort métallique hyperélastique comprenant au moins un câble, dit hyperélastique (50) :

• **caractérisé en ce que** les dits câbles hyperélastiques (50) comprennent une unique couche (52) constituée de N éléments filaires métalliques (54) enroulés en hélice et présentant un diamètre externe D, chaque élément filaire métallique (54) de la couche (52) décrivant, lorsque le câble (50) s'étend selon une direction sensiblement rectiligne, une trajectoire en forme d'hélice autour d'un axe principal (A) sensiblement parallèle à la direction sensiblement rectiligne, de sorte que, dans un plan de coupe sensiblement perpendiculaire à l'axe principal (A), la distance entre le centre de chaque élément filaire métallique (54) de la couche (52) et l'axe principal (A) est égale à la moitié du diamètre d'hélice Dh et est sensiblement constante et égale pour tous les éléments filaires métalliques (54) de la couche (52), les éléments filaires métalliques (54) définissant une voûte interne (58) du câble de diamètre Dv, chaque élément filaire métallique (54) présentant un diamètre Df et un rayon de courbure d'hélice Rf défini par $Rf = P/(\pi \times Sin(2\alpha))$ avec P le pas de chaque élément filaire métallique exprimé en millimètres et $\alpha$ l'angle d'hélice de chaque élément filaire métallique (54), **caractérisé en ce que**, Dh, D, Dv, Df et Rf étant exprimés en millimètres :

•

$$9 \leq Rf / Df \leq 30,$$

•

$$1,30 \leq Dv / Df \leq 4,5,$$

et

$$Dv = Dh\text{-}Df,$$

• lesdits câbles hyperélastiques étant noyés dans un composé caoutchouteux.

2. Pneumatique (1) selon la revendication 1, dans lequel le rapport K du pas P sur le diamètre Df de chaque élément filaire métallique (54), des dits câbles hyperélastiques, est tel que $19 \leq K \leq 44$, de préférence $20 \leq K \leq 40$ et plus préférentiellement $23 \leq K \leq 39$, P et Df étant exprimés en millimètres.

3. Pneumatique (1) selon l'une des revendications 1 ou 2, dans lequel il existe un jeu radial relatif, Jr, entre deux éléments filaires adjacents des dits câbles hyperélastiques, $Jr = N/(n*(D\text{-}Df)) \times (Dh \times Sin(\pi/N) - (Df / Cos(\alpha \times \pi/180)))$, $\alpha$ étant l'angle d'hélice, exprimé en degrés, de chaque élément filaire métallique (54) et Dv=Dh-Df, et Jr des renforts métalliques élastiques de la couche de frettage (311) étant tel que 0,10 ≤ Jr ≤ 0,6.

4. Pneumatique (1) selon l'une quelconque des revendications précédentes, dans lequel chaque renfort métallique hyperélastique de ladite couche de frettage radialement extérieure hyperélastique (323) est un câble hyperélastique.

5. Pneumatique (1) selon l'une quelconque des revendications 1 à 3, dans lequel chaque renfort métallique hyperélastique de ladite couche de frettage (323) radialement extérieure hyperélastique est un toron de câbles hyperélastiques.

6. Pneumatique (1) selon l'une quelconque des revendications précédentes, dans lequel les renforts métalliques hyperélastiques de ladite couche de frettage (323) radialement extérieure hyperélastique, ont un module sécant à 2% d'allongement au plus égal à 80 GPa et un allongement à rupture au moins égal à 4%, ces caractéristiques étant mesurées selon la norme ASTM D 2969-04 de 2014.

7. Pneumatique (1) selon l'une quelconque des revendications précédentes, dans lequel les renforts métalliques hyperélastiques de ladite couche de frettage (323) radialement extérieure hyperélastique, ont une valeur de déformation de flambement en compression au moins égale à 2%.

8. Pneumatique (1) selon l'une quelconque des revendications précédentes, dans lequel de part et d'autre du plan équateur, la couche de frettage (323) radialement extérieure hyperélastique est constituée par l'enroulement circonférentiel d'une bande constituée de plusieurs renforts métalliques hyperélastiques.

9. Pneumatique (1) selon l'une quelconque des revendications précédentes, dans lequel de part et d'autre du plan équateur, l'extrémité axiale la plus axialement extérieure de la couche de frettage (323) radialement extérieure hyperélastique, est axialement extérieure à l'extrémité axiale de la couche de travail de plus grande largeur axiale (321), d'une distance au moins égale à Ds/2.

10. Pneumatique (1) selon l'une quelconque des revendications précédentes, comprenant une armature de protection (31) radialement extérieure à l'armature de travail (32), comprenant au moins une couche de protection (311, 312), dans lequel la couche de protection la plus radialement intérieure (311) a une largeur axiale LP1 au moins égale à 1.05 fois et au plus égale à 1.25 fois la largeur axiale maximale LTmax de la couche de travail de la plus grande largeur axiale (321).

11. Pneumatique (1) selon l'une quelconque des revendications 1 à 9, comprenant une armature de protection (31) radialement extérieure à l'armature de travail (32), comprenant au moins une couche de protection (311, 312), ledit pneumatique comprenant de part et d'autre du plan équateur, une couche de frettage radialement extérieure hyperélastique (323) comprenant une extrémité axialement intérieure, , dans lequel de part et d'autre du plan équateur, l'extrémité axiale de la couche de protection de plus grande largeur axiale (311) est axialement intérieure à l'extrémité axiale la plus axialement intérieure de la couche de frettage radialement extérieure hyperélastique (323).

**Patentansprüche**

1. Reifen (1) für ein Fahrzeug vom Typ Lastkraftwagen, Baufahrzeug oder landwirtschaftliches Fahrzeug, beinhaltend:

    • eine Umfangsmittelebene, als Äquatorialebene bezeichnet, die zu der Drehachse des Reifens senkrecht ist und den Reifen in zwei im Wesentlichen symmetrische Halbtori teilt,
    • eine Scheitelbewehrung (3), die zu einer Lauffläche (2) radial innen liegend ist und zu einer Karkassenbewehrung (4) radial außen liegend ist,
    • wobei die Scheitelbewehrung (3) mindestens eine Arbeitsbewehrung (32) beinhaltet, wobei die Scheitelbewehrung mindestens zwei Arbeitsschichten (321, 322), eine mit einer größeren axialen Breite (321) und eine mit einer kleineren axialen Breite (322), beinhaltet,
    • wobei jede Arbeitsschicht (321, 322) nicht dehnbare Verstärkungselemente beinhaltet, die zueinander parallel sind und mit der Umfangsrichtung Winkel bilden, die um mindestens 15° und um höchstens 40° abgewinkelt sind, wobei die zwei Winkel der zwei Arbeitsschichten entgegengesetzte Vorzeichen aufweisen,
    • wobei ein axialer Abstand Ds der maximale Wert der axialen Abstände, gemessen zu beiden Seiten der Äquatorialebene zwischen dem axialen Ende der Arbeitsschicht mit der kleineren axialen Breite (322) und dem axialen Ende der Arbeitsschicht mit der größeren axialen Breite (321), ist,

• wobei die Scheitelbewehrung zu beiden Seiten der Äquatorialebene mindestens eine Umreifungsschicht (323), die zu der radial am weitesten außen liegenden Arbeitsschicht (321, 322) radial außen liegend ist und als hyperelastische, radial außen liegende Umreifungsschicht bezeichnet wird, beinhaltet, deren axial am weitesten außen liegendes axiales Ende um einen axialen Abstand von mindestens gleich Ds/2 zu dem axialen Ende der Arbeitsschicht mit der kleineren axialen Breite (322) axial außen liegt und deren axial am weitesten innen liegender Punkt um einen axialen Abstand von mindestens gleich Ds/2 zu dem axialen Ende der Arbeitsschicht mit der kleineren axialen Breite (322) axial innen liegt,

• wobei die hyperelastische, radial außen liegende Umreifungsschicht (323) zu beiden Seiten der Äquatorialebene hyperelastische Metallverstärkungen beinhaltet, die zueinander parallel sind und mit einer Umfangsrichtung (XX') des Reifens einen Winkel von höchstens 5° bilden, wobei jede hyperelastische Metallverstärkung mindestens ein sogenanntes hyperelastisches Seil (50) beinhaltet:

• **dadurch gekennzeichnet, dass** die hyperelastischen Seile (50) eine einzige Schicht (52) beinhalten, die aus N schraubenförmig umeinander gewickelten Metalldrahtelementen (54) besteht und einen Außendurchmesser D aufweist, wobei jedes Metalldrahtelement (54) der Schicht (52), wenn sich das Seil (50) gemäß einer im Wesentlichen geradlinigen Richtung erstreckt, eine schraubenförmige Bahn um eine Hauptachse (A), die zu der im Wesentlichen geradlinigen Richtung im Wesentlichen parallel ist, beschreibt, sodass in einer zu der Hauptachse (A) im Wesentlichen senkrechten Schnittebene der Abstand zwischen der Mitte jedes Metalldrahtelements (54) der Schicht (52) und der Hauptachse (A) gleich der Hälfte des Schraubendurchmessers Dh ist und im Wesentlich konstant und für alle Metalldrahtelemente (54) der Schicht (52) gleich ist, wobei die Metalldrahtelemente (54) ein inneres Gewölbe (58) des Seils mit einem Durchmesser Dv definieren, wobei jedes Metalldrahtelement (54) einen Durchmesser Df und einen Schraubenkrümmungsradius Rf aufweist, der durch Rf=P/($\pi \times$ Sin(2$\alpha$)) definiert wird, wobei P die in Millimetern ausgedrückte Steigung jedes Metalldrahtelements ist und $\alpha$ der Steigungswinkel jedes Metalldrahtelements (54) ist, **dadurch gekennzeichnet, dass**, wobei Dh, D, Dv, Df und Rf in Millimetern ausgedrückt sind:

• 

$$9 \le Rf / Df \le 30,$$

• 

$$1,30 \le Dv / Df \le 4,5 \text{ und } Dv = Dh-Df,$$

• wobei die hyperelastischen Seile in eine Kautschukzusammensetzung eingebettet sind.

2. Reifen (1) nach Anspruch 1, wobei das Verhältnis K der Steigung P zu dem Durchmesser Df jedes Metalldrahtelements (54) der hyperelastischen Seile derart ist, dass $19 \le K \le 44$, vorzugsweise $20 \le K \le 40$ und noch bevorzugter $23 \le K \le 39$, wobei P und Df in Millimetern ausgedrückt sind.

3. Reifen (1) nach einem der Ansprüche 1 oder 2, wobei zwischen zwei benachbarten Drahtelementen der hyperelastischen Seile ein relatives radiales Spiel Jr besteht, Jr =N/($\pi$*(D-Df)) $\times$ (Dh $\times$ Sin($\pi$/N) - (Df / Cos($\alpha \times \pi$/180))), wobei $\alpha$ der in Grad ausgedrückte Steigungswinkel jedes Metalldrahtelements (54) und Dv=Dh-Df ist und wobei Jr der elastischen Metallverstärkungen der Umreifungsschicht (311) derart ist, dass $0,10 \le Jr \le 0,6$.

4. Reifen (1) nach einem beliebigen der vorhergehenden Ansprüche, wobei jede hyperelastische Metallverstärkung der hyperelastischen, radial außen liegenden Umreifungsschicht (323) ein hyperelastisches Seil ist.

5. Reifen (1) nach einem beliebigen der Ansprüche 1 bis 3, wobei jede hyperelastische Metallverstärkung der hyperelastischen, radial außen liegenden Umreifungsschicht (323) ein verseilter Strang aus hyperelastischen Seilen ist.

6. Reifen (1) nach einem beliebigen der vorhergehenden Ansprüche, wobei die hyperelastischen Metallverstärkungen der hyperelastischen, radial außen liegenden Umreifungsschicht (323) einen Sekantenmodul bei 2 % Dehnung von höchstens 80 GPa und eine Bruchdehnung von mindestens 4 % aufweisen, wobei diese Eigenschaften gemäß der Norm ASTM D 2969-04 von 2014 gemessen werden.

7. Reifen (1) nach einem beliebigen der vorhergehenden Ansprüche, wobei die hyperelastischen Metallverstärkungen der hyperelastischen, radial außen liegenden Umreifungsschicht (323) einen Verformungswert beim Kompressionsbiegen von mindestens 2 % aufweisen.

8. Reifen (1) nach einem beliebigen der vorhergehenden Ansprüche, wobei die hyperelastische, radial außen liegende Umreifungsschicht (323) zu beiden Seiten der Äquatorialebene durch das umfangsmäßige Aufwickeln eines Streifens gebildet ist, der aus mehreren hyperelastischen Metallverstärkungen besteht.

9. Reifen (1) nach einem beliebigen der vorhergehenden Ansprüche, wobei zu beiden Seiten der Äquatorialebene das axial am weitesten außen liegende axiale Ende der hyperelastischen, radial außen liegende Umreifungsschicht (323) um einen Abstand von mindestens gleich Ds/2 zu dem axialen Ende der Arbeitsschicht mit der größeren axialen Breite (321) außen liegt.

10. Reifen (1) nach einem beliebigen der vorhergehenden Ansprüche, beinhaltend eine zu der Arbeitsbewehrung (32) radial außen liegende Schutzbewehrung (31), die mindestens eine Schutzschicht (311, 312) beinhaltet, wobei die radial am weitesten innen liegende Schutzschicht (311) eine axiale Breite LP1 von mindestens dem 1,05-fachen und höchstens dem 1,25-fachen der maximalen axialen Breite LTmax der Arbeitsschicht mit der größeren axialen Breite (321) aufweist.

11. Reifen (1) nach einem beliebigen der Ansprüche 1 bis 9, beinhaltend eine zu der Arbeitsbewehrung (32) radial außen liegende Schutzbewehrung (31), die mindestens eine Schutzschicht (311, 312) beinhaltet, wobei der Reifen zu beiden Seiten der Äquatorialebene eine hyperelastische, radial außen liegende Umreifungsschicht (323) beinhaltet, die ein axial innen liegendes Ende beinhaltet, wobei das axiale Ende der Schutzschicht mit der größeren axialen Breite (311) zu beiden Seiten der Äquatorialebene zu dem axial am weitesten innen liegenden axialen Ende der hyperelastischen, radial außen liegenden Umreifungsschicht (323) axial innen liegt.

## Claims

1. Tyre (1) for a vehicle of the heavy-duty, construction plant or agricultural type, comprising:

   • a median circumferential plane, called the equatorial plane, perpendicular to the axis of rotation of the tyre and dividing the tyre into two substantially symmetrical half-torus shapes,
   • a crown reinforcement (3), radially on the inside of a tread (2) and radially on the outside of a carcass reinforcement (4);
   • the crown reinforcement (3) comprising at least one working reinforcement (32), the crown reinforcement comprising at least two working layers (321, 322), one of greatest axial width (321) and one of smallest axial width (322),
   • each working layer (321, 322) comprising inextensible reinforcing elements parallel to one another, forming, with the circumferential direction, oriented angles at least equal to 15° and at most equal to 40°, the two angles of the two working layers being of opposite sign,
   • an axial distance Ds being the maximum value of the axial distances measured on either side of the equatorial plane between the axial end of the working layer of smallest axial width (322) and the axial end of the working layer of greatest axial width (321),
   • the crown reinforcement comprising on either side of the equatorial plane at least one hooping layer (323) radially on the outside of the radially outermost working layer (321, 322), called the hyperelastic radially outer hooping layer, of which the axially outermost axial end is axially outside the axial end of the working layer of smallest axial width (322) by an axial distance at least equal to Ds/2 and of which the axially innermost point is axially inside the axial end of the working layer of smallest axial width (322), by an axial distance at least equal to Ds/2,
   • said hyperelastic radially outer hooping layer (323), on either side of the equatorial plane, comprising hyperelastic metal reinforcers, parallel to one another and forming, with a circumferential direction (XX') of the tyre, an angle at most equal to 5°, each hyperelastic metal reinforcer comprising at least one cord, called hyperelastic cord (50):
   • **characterized in that** said hyperelastic cords (50) comprise a single layer (52) consisting of N metal filamentary elements (54) wound in a helix and having an external diameter D, each metal filamentary element (54) of the layer (52) describing, when the cord (50) extends in a substantially rectilinear direction, a trajectory in the form of a helix around a main axis (A) substantially parallel to the substantially rectilinear direction, so that, in a section plane substantially perpendicular to the main axis (A), the distance between the centre of each metal filamentary element (54) of the layer (52) and the main axis (A) is equal to half the helix diameter Dh and is substantially constant and equal for all the metal filamentary elements (54) of the layer (52), the metal filamentary elements (54) defining an internal enclosure (58) of the cord of diameter Dv, each metal filamentary element (54) having a diameter Df and a helix radius of curvature Rf defined by Rf=P/($\pi \times$ Sin($2\alpha$)) with P the pitch of each metal filamentary element expressed in millimetres and $\alpha$ the helix angle of each metal filamentary element (54), **characterized in that**, with Dh, D, Dv, Df and Rf being expressed in millimetres:

-

$$9 \leq Rf / Df \leq 30,$$

and
-

$$1.30 \leq Dv / Df \leq 4.5,$$

*

$$Dv = Dh - Df$$

- said hyperelastic cords being embedded in a rubber compound.

2. Tyre (1) according to Claim 1, in which the ratio K of the pitch P to the diameter Df of each metal filamentary element (54) of said hyperelastic cords is such that $19 \leq K \leq 44$, preferably $20 \leq K \leq 40$ and more preferably $23 \leq K \leq 39$, P and Df being expressed in millimetres.

3. Tyre (1) according to one of Claims 1 or 2, in which there is a relative radial clearance, Jr, between two adjacent filamentary elements of said hyperelastic cords, Jr =N/($\pi$*(D-Df)) $\times$ (Dh $\times$ Sin($\pi$/N) - (Df / Cos($\alpha \times \pi$/180))), $\alpha$ being the helix angle, expressed in degrees, of each metal filamentary element (54) and Dv=Dh-Df, and Jr of the elastic metal reinforcers of the hooping layer (311) being such that $0.10 \leq Jr \leq 0.6$.

4. Tyre (1) according to any one of the preceding claims, in which each hyperelastic metal reinforcer of said hyperelastic radially outer hooping layer (323) is a hyperelastic cord.

5. Tyre (1) according to any one of Claims 1 to 3, in which each hyperelastic metal reinforcer of said hyperelastic radially outer hooping layer (323) is a strand of hyperelastic cords.

6. Tyre (1) according to any one of the preceding claims, in which the hyperelastic metal reinforcers of said hyperelastic radially outer hooping layer (323) have a secant modulus at 2% elongation at most equal to 80 GPa and an elongation at break at least equal to 4% being measured in accordance with the standard ASTM D 2969-04 of 2014.

7. Tyre (1) according to any one of the preceding claims, in which the hyperelastic metal reinforcers of said hyperelastic radially outer hooping layer (323) have a compression buckling deformation value at least equal to 2%.

8. Tyre (1) according to any one of the preceding claims, in which on either side of the equatorial plane, the hyperelastic radially outer hooping layer (323) is formed by the circumferential winding of a strip made up of a plurality of hyperelastic metal reinforcers.

9. Tyre (1) according to any one of the preceding claims, in which on either side of the equatorial plane, the axially outermost axial end of the hyperelastic radially outer hooping layer (323) is axially outside the axial end of the working layer of greatest axial width (321), by a distance at least equal to Ds/2.

10. Tyre (1) according to any one of the preceding claims, comprising a protective reinforcement (31) radially outside the working reinforcement (32), comprising at least one protective layer (311, 312), in which the radially innermost protective layer (311) has an axial width LP1 at least equal to 1.05 times and at most equal to 1.25 times the maximum axial width LTmax of the working layer with the greatest axial width (321).

11. Tyre (1) according to any one of Claims 1 to 9, comprising a protective reinforcement (31) radially outside the working reinforcement (32), comprising at least one protective layer (311, 312), said tyre comprising, on either side of the equatorial plane, a hyperelastic radially outer hooping layer (323) comprising an axially inner end, in which on either side of the equatorial plane, the axial end of the protective layer of greatest axial width (311) is axially inside the axially innermost axial end of the hyperelastic radially outer hooping layer (323).

[Fig 1]

[Fig 2]

[Fig 3]

[Fig 4]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5843583 A
- WO 2005014925 A
- WO 2007090603 A
- WO 2007003562 A1
- WO 2014095099 A
- WO 2007003562 A